(19) Europäisches Patentamt
European Patent Office
Office européen des brevets

(11) **EP 3 719 494 A1**

(12) **EUROPEAN PATENT APPLICATION**

(43) Date of publication:
**07.10.2020  Bulletin 2020/41**

(51) Int Cl.:
***G01N 30/86*** *(2006.01)*          *G01N 30/74* *(2006.01)*
***G01N 30/88*** *(2006.01)*

(21) Application number: **20154468.1**

(22) Date of filing: **30.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer AG**
**51373 Leverkusen (DE)**

(72) Inventor: **Buyel, Joschka**
**50679 Köln (DE)**

(74) Representative: **BIP Patents**
**c/o Bayer Intellectual Property GmbH**
**Alfred-Nobel-Straße 10**
**40789 Monheim am Rhein (DE)**

(54) **USING IN-LINE MULTI-ANGLE-LIGHT-SCATTERING (MALS) DETECTORS FOR ESTABLISHING DIGITAL TWINS OF CHROMATOGRAPHY UNIT OPERATIONS**

(57)     What is described herein relates to the use of In-Line Multi Angle Light Scattering for establishing a digital model of a chromatography unit operation.

FIG 2

EP 3 719 494 A1

**Description**

For many commercial biotech manufacturing processes including protein therapeutics such as monoclonal antibodies, the aggregate removal process can be complex and challenging. Various factors such as light, mechanical influences and thermal conditions can contribute to aggregate formation. Removal of aggregates is necessary in manufacture of protein drugs as protein aggregates can have adverse immune responses and potentially affect safety and efficacy. Thus, aggregation level is directly linked to product quality and is an important critical quality attribute (CQA) that is monitored and controlled. Therefore, purifications methods such as various chromatographies, e.g. Protein A affinity chromatography, Ion exchange chromatography (IEX), Size-exclusion chromatography (SEC), and hydrophobic interaction chromatography (HIC), etc. , have been developed to remove aggerate impurities in order to ensure safe and efficacious protein drugs. However, on a commercial scale aggregate removal usually comes at the expense of yield. Thus, process control and process analytical technologies (PAT) are required to achieve an efficient commercial biotech manufacturing process delivering a safe and effective product.

It was therefore an object of the present invention to provide improved methods for process control and process analytical technologies in biotech manufacturing

This object was solved by using an In-Line Multi-Angle-Light-Scattering for establishing a digital model of a chromatography unit operation.

It was surprisingly discovered that employing In-Line Multi-Angle-Light-Scattering allows for generation of high quality potent chromatography models such as a digital twin of the chromatography unit operation in question. Said digital twin model established using data generated with In-Line Multi-Angle-Light-Scattering enables modelling of all interactions between a protein of interest and a separation medium - usually a chromatography unit operation. In detail the signal generated by In-Line Multi Angle Light Scattering changes according to the molecule (protein) size analyzed. As the signal is continuous for a given sample, i.e. either a signal reflecting the sizes of the one or more proteins in the sample can be detected or not, the signal generated by In-Line Multi Angle Light Scattering overcomes the limitation so far set by resources and the required volume for analysis to establish e.g. isotherm chromatography models. Hence employing In-Line Multi Angle Light Scattering is much more efficient and less time consuming than previously employed procedures where fractions were collected and analyzed for impurity assessment as well as confirmation of molecular weight (MW) and low or high molecular weight species (LMW / HMW, respectively) share fraction after the purification was finished. The higher resolution of data enables more accurate isotherms that describe the column - protein interaction of LMW, monomer and HMW. The benefit of the use, method and system described herein becomes especially apparent during process development and optimization where different operation conditions (e.g., pH and salt concentrations) are assessed with a more accurate model requiring reduced resources especially in terms of time and analytical resources.

Therefore, overall an efficient process-development, transfer, characterization and control of a commercial biotech manufacturing process as well as a more reliable and/or more accurate manufacturing scale production process deviation handling becomes possible.

Preferably the digital model is a digital twin.

As used herein the term "digital twin" refers to a digital copy of the physical system used to optimize the operation of said physical systems. The digital twin is based on measured data e.g. experimental chromatography experiments.

In the case of biotech downstream purification processes these processes can be described by digital twins (isotherm models). The models can describe the generated product quantity and quality (outputs) based on process parameters (inputs), which are connected through a isotherm that describes the physico chemical properties of a process step and the molecule that is being purified. The setup of the isotherm relies on experimental chromatography experiments. During these experiments time dependent information on outputs is collected. This information can be available in real time (online, e.g. UV detector) or needs to be generated at-line by sampling and application of analytical methods. The higher the resolution (number) of the samples e.g. generated using HPLC-SEC the more accurate the generated isotherm model.

As used herein the term "quality attribute" refers to

$$QA_1 = \int_{t_{(Elution,begin)}}^{t_{Elution,end}} c_{Target}(\tau) \cdot F_{Elution}(\tau)\, d\tau$$

and

$$QA_2 = \int_{t_{(Elution,begin)}}^{t_{Elution,end}} c_{Impurity}(\tau) \cdot F_{Elution}(\tau)\, d\tau$$

Where c is the concentration and F the flow rate.

In this respect it should be noted that the molecule of interest is not referred to as critical quality attribute as it is the wanted entity. Instead the molecule of interest is referred to as "quality attribute". It is measured e.g. as % monomer.

As used herein the term "Multi Angle Light Scattering" (MALS) is used synonymous with "In Line Multi Angle Light Scattering" and refers to a technique for measuring the light scattered by a sample into a plurality of angles. It is used for determining both the absolute molar mass and the average size of molecules in solution, by detecting how they scatter light. The measured intensity is proportional to MW and concentration of the protein. The protein concentration can be measured using ultraviolet absorption (UV), differential refractive index, or alternate concentration determination methods.

In one embodiment In-Line multiangle light scattering using laser light is employed.

In one embodiment the MALS system is a Wyatt DAWN 8+ with the Astra light scattering software.

Preferred types of chromatography are Cation & anion exchange chromatography (CEX and AEX, respectively), Protein A affinity chromatography, Mixed mode chromatography, Size-exclusion chromatography (SEC), and Hydrophobic interaction chromatography (HIC)

In a different aspect what is described herein relates to a method for establishing a digital model of a chromatography using data generated via In Line Multi Angle Light Scattering comprising the steps of

> a) introducing a sample comprising at least one molecule of interest into a chromatography column or other separation means;
> b) loading, washing, eluting or stripping the chromatography column or other separation means,
> c) providing at least one multi angle light scattering detector and at least one concentration detector wherein the sample comprising the at least one molecule of interest passes both detectors as soon as it leaves the column or other separation means
> d) determining the average molecule radius of the at least one molecule of interest comprised in the sample passing through the In-Line Multi-Angle-Light-Scattering
> e) determining the concentration of the at least one molecule of interest comprised in the sample using the data generated by the at least one concentration detector
> f) determining the molecular mass of the at least one molecule of interest comprised in the sample using the data generated by the In-Line Multi-Angle-Light-Scattering detector and concentration detector
> g) assuming a functional dependence
> h) establishing a digital model of the chromatography column or other separation means.

In one example step f) is carried out by a computer program receiving the signals from the at least one In-Line Multi-Angle-Light-Scattering detector and at least one concentration detector.

In a preferred embodiment the method step of assuming a functional difference comprises generation of at least two, more preferably three sub models. In the case of three sub models one sub model is generated for low molecular weight molecules comprised in the sample, one sub model is generated for the molecule of interest (monomer) and one sub model is generated for high molecular weight molecules comprised in the sample. The advantage of using sub models is an even better overall understanding of the process. In other words via using three different submodels it is possible to accurately assess the ratio of HMW molecules/ molecule of interest/ LMW molecules.

In a preferred embodiment a digital model, e.g. a digital twin, established using the method described herein is used to model a chromatography unit operation e.g. during process development, process transfer, process characterization and/or process control of a commercial biotech manufacturing process. As soon as said digital model exists and signal correlation is established it could even be sufficient to only monitor the UV signal to enable a real time control of the chromatography.

In a further aspect what is described herein relates to a system for establishing a digital model of a chromatography unit operation using data collected from In-Line Multi-Angle-Light-Scattering comprising at least

> • at least one measurement point for In-Line Multi-Angle-Light-Scattering
> • at least one measurement point for an UV signal
> • at least one chromatography column or other separation means,
> • at least one computational means using data collected from the at least two measurement points

wherein at the at least one measurement point of the In-Line Multi-Angle-Light-Scattering at least one characteristic of a sample corresponding to at least one actual quality attribute or at least one actual critical quality attribute is measured and at the at least one measurement point for an UV signal at least the concentration of a protein of interest comprised in the sample is measured wherein based on the data collected from the at least two measurement points the at least computational means is configured to calculate the share of the at least one actual quality attribute or the share of the at least one actual critical quality attribute in the sample over time and based on that calculation a digital model of the at least one chromatography column is fitted.

In a preferred embodiment of the system described herein the measured quality attribute is the radius of at least one molecule of interest comprised in the sample.

Example:

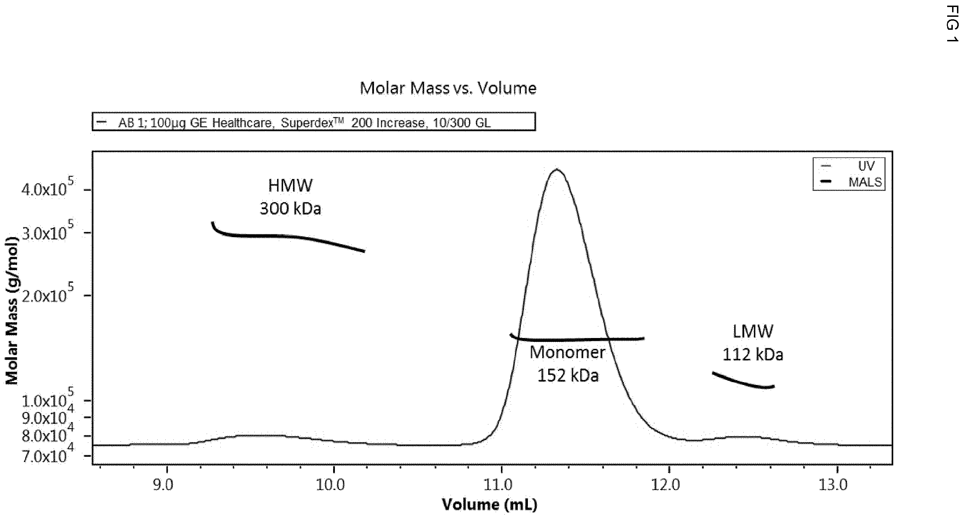

In this example 10μL of a sample comprising 4.5g/L of a molecule of interest were applied to a SEC (size exclusion chromatography) column. In this example the elution profile of the molecule of interest was analyzed. An Äkta UV detector coupled to the exit of the SEC column was used to detect the concentration of the molecules in the sample (cf. peak of FIG: 1) . A Wyatt DAWN 8 was used to detect the average molecule radius of the molecules in the sample. The signals of both detectors were used to calculate the molecular mass of the molecule comprised in the sample employing unicorn software. The results are depicted in FIG. 1. In this example, three MALS signals were detected, one from molecules of around 300 kDa, one from molecules of around 152 kDa and one from molecules of 112 kDa (cf. Fig. 1). Thus, the protein of interest under the given experimental conditions such as a flow rate of 0.5 mL/min is eluted as dimer, as monomer and as fragments. The UV signals clearly demonstrates that most of the protein of interest is eluted as the 152 kDa monomer. Via integration of the areas under the UV peaks, it is possible to assume a functional dependence here to conclude which ratio of dimers, monomers and fragments was comprised in the original 10 μL sample. Once these different molecular weights are known it is possible to calculate the share of a single molecule in any sample where mixtures of LMW and molecule of interest (monomer) or HMW and molecue of interest (monomer) are present and separated using known techniques such as HIC/ SEC /Mix mode/ Protein A / CEX (cf. Table 1).

The measured MW values might be adjusted by a concentration factor ($A_2$). This calculation is know in the state of the art.

Table 1

| MW | HMW Share [%] | Monomer Share [%] |
|---|---|---|
| 300 | 100% | 0% |
| 285.2 | 90% | 10% |
| 270.4 | 80% | 20% |
| 255.6 | 70% | 30% |
| 240.8 | 60% | 40% |
| 226 | 50% | 50% |
| 211.2 | 40% | 60% |
| 196.4 | 30% | 70% |
| 181.6 | 20% | 80% |
| 166.8 | 10% | 90% |
| 152 | 0% | 100% |
| 148 | 10% | 90% |
| 144 | 20% | 80% |
| 140 | 30% | 70% |
| 136 | 40% | 60% |
| 132 | 50% | 50% |
| 128 | 60% | 40% |
| 124 | 70% | 30% |
| 120 | 80% | 20% |
| 116 | 90% | 10% |
| 112 | 100% | 0% |

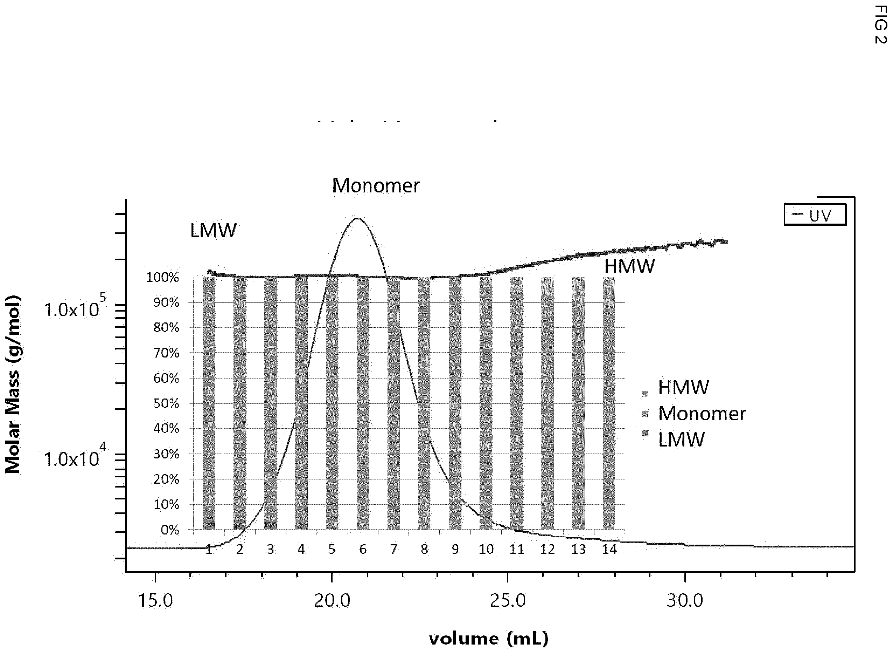

The protein of interest is processed under these conditions on various chromatography steps e.g. CEX etc. as detailed above. The MALS and UV signal can be used to establish a model such as a digital twin to simulate different process conditions. The advantage of the described approach is depicted in Figure 2. In detail Fig. 2 shows that in contrast to the models of the state of the art, which rely on collected fractions and interpolated data points for areas between the analyzed fractions, the MALS signal is more a continuous signal not requiring interpolated data and hence allowing for generation of a more accurate model. In other words the digital model based on MALS and UV data has a better "fit" while requiring less resources and time i.e. establishing such a model is cheaper and faster.

## Claims

1. Use of In-Line Multi Angle Light Scattering for establishing a digital model of a chromatography unit operation.

2. Method for establishing a digital model of a chromatography using data generated via In-Line Multi Angle Light Scattering comprising the steps of

   a) introducing a sample comprising at least one molecule of interest into a chromatography column or other separation means;
   b) loading, washing, eluting or stripping the chromatography column or other separation means,
   c) providing at least one multi angle light scattering detector and at least one concentration detector wherein the sample comprising the at least one molecule of interest passes both detectors as soon as it leaves the column or other separation means
   d) determining the average molecule radius of the at least one molecule of interest comprised in the sample passing through the In-Line Multi-Angle-Light-Scattering detector
   e) determining the concentration of the at least one molecule of interest comprised in the sample using the data generated by the at least one concentration detector
   f) determining the molecular mass of the at least one molecule of interest comprised in the sample using the data generated by the In-Line Multi-Angle-Light-Scattering detector and concentration detector
   g) assuming a functional dependence
   h) establishing a digital model of the chromatography column or other separation means.

3. Method according to claim 2, wherein the method step of assuming a functional difference comprises generation of at least two, more preferably three sub models.

4. Method according to claim 3, wherein three sub-models are generated one sub model for low molecular weight molecules comprised in the sample, one sub model for the molecule of interest and one sub model for high molecular weight molecules.

5. Digital model established with a method according to claims 2-4.

6. Using a digital model established with the method according to claims 2-4 to model a chromatography unit operation during process development, process transfer, process characterization and/or process control of a biotech manufacturing process.

7. System for establishing a digital model of a chromatography unit operation using data collected from In Line Multi Angle Light Scattering comprising at least

   • at least one measurement point for In Line Multi Angle Light Scattering
   • at least one measurement point for an UV signal
   • at least one chromatography column or other separation means,
   • at least one computational means using data collected from the at least two measurement points

   wherein at the at least one measurement point of the In Line Multi Angle Light Scattering at least one characteristic of a sample corresponding to at least one actual quality attribute or at least one actual critical quality attribute is measured and at the at least one measurement point for an UV signal at least the concentration of a protein of interest comprised in the sample is measured wherein based on the data collected from the at least two measurement points the at least computational means is configured to calculate the share of the at least one actual quality attribute or the share of the at least one actual critical quality attribute in the sample over time and based on that calculation a digital model of the at least one chromatography column is fitted.

8. System according to claim 7, wherein the measured at least one quality attribute is the radius of at least one molecule of interest comprised in the sample.

FIG 1

Molar Mass vs. Volume

FIG 2

Europäisches
Patentamt
European
Patent Office
Office européen
des brevets

## EUROPEAN SEARCH REPORT

Application Number

EP 20 15 4468

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2005/240385 A1 (XIE RONG [US] ET AL)<br>27 October 2005 (2005-10-27)<br>* figures 1,2 *<br>* claims 1,2,4,5,7,9,10,12 *<br>* paragraphs [0047], [0067] *<br>* paragraph [0048]; claim 8 *<br>* paragraph [0006] *<br>* paragraph [0050] *<br>* claims 6,13 *<br>* paragraph [0051] *<br>* paragraph [0072] *<br>* paragraphs [0170] - [0173] *<br>* paragraph [0009] *<br>----- | 1,5-8<br><br>2-4 | INV.<br>G01N30/86<br><br>ADD.<br>G01N30/74<br>G01N30/88 |
| Y | Wikipedia: "4/07/2020 Multiangle light scattering -Wikipedia Multiangle light scattering",<br>Wikipedia.org,<br>14 October 2019 (2019-10-14), XP055715909,<br>Retrieved from the Internet:<br>URL:https://en.wikipedia.org/w/index.php?title=Multiangle_light_scattering&oldid=921242598<br>[retrieved on 2020-07-17]<br>* page 1, paragraph 1 *<br>----- | 2-4 | TECHNICAL FIELDS SEARCHED (IPC)<br><br>G01N |

-/--

The present search report has been drawn up for all claims

| Place of search | Date of completion of the search | Examiner |
|---|---|---|
| Munich | 17 July 2020 | Marembert, Vincent |

EPO FORM 1503 03.82 (P04C01)

page 1 of 3

Europäisches
Patentamt

European
Patent Office

Office européen
des brevets

# EUROPEAN SEARCH REPORT

Application Number

EP 20 15 4468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOYI YANG ET AL:  "Molecular Characterization and Functional Activity of an IL-15 Antagonist MutIL-15/Fc Human Fusion Protein", MOLECULAR PHARMACEUTICS, vol. 10, no. 2, 22 January 2013 (2013-01-22), pages 717-727, XP055582655, US ISSN: 1543-8384, DOI: 10.1021/mp300513j * page 719, left-hand column, line 58 - right-hand column, line 24 * * page 720, right-hand column * ----- | 1,2,5-7 | |
| A | EP 0 665 433 A1 (WYATT TECHNOLOGY [US]) 2 August 1995 (1995-08-02) * page 2, lines 25-27 * ----- | 1,2,5-7 | |
| A | ASTAFIEVA I V ET AL:  "Absolute on-line molecular mass analysis of basic fibroblast growth factor and its multimers by reversed-phase liquid chromatography with multi-angle laser light scattering detection", JOURNAL OF CHROMATOGRAPHY A, ELSEVIER, AMSTERDAM, NL, vol. 740, no. 2, 2 August 1996 (1996-08-02), pages 215-229, XP004020139, ISSN: 0021-9673, DOI: 10.1016/0021-9673(96)00134-3 * abstract * ----- -/-- | 1,2 | TECHNICAL FIELDS SEARCHED (IPC) |

The present search report has been drawn up for all claims

| Place of search | Date of completion of the search | Examiner |
|---|---|---|
| Munich | 17 July 2020 | Marembert, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 20 15 4468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | T. WANG ET AL: "Use of Multi-Angle Laser Light Scattering and Size-Exclusion Chromatography to Characterize the Molecular Weight and Types of Aggregates Present in Commercial Whey Protein Products", JOURNAL OF DAIRY SCIENCE, vol. 86, no. 10, 1 October 2003 (2003-10-01), pages 3090-3101, XP055715011, US ISSN: 0022-0302, DOI: 10.3168/jds.S0022-0302(03)73909-5 * abstract * ----- | 1,2,5-7 | |

TECHNICAL FIELDS
SEARCHED      (IPC)

The present search report has been drawn up for all claims

| Place of search | Date of completion of the search | Examiner |
|---|---|---|
| Munich | 17 July 2020 | Marembert, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 4468

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2020

| Patent document cited in search report | | Publication date | Patent family member(s) | | Publication date |
|---|---|---|---|---|---|
| US 2005240385 | A1 | 27-10-2005 | NONE | | |
| EP 0665433 | A1 | 02-08-1995 | DE | 69433615 T2 | 24-03-2005 |
| | | | EP | 0665433 A1 | 02-08-1995 |
| | | | JP | 3580380 B2 | 20-10-2004 |
| | | | JP | H0835961 A | 06-02-1996 |
| | | | US | 5528366 A | 18-06-1996 |

EPO FORM P0459

For more details about this annex : see Official Journal of the European Patent Office, No. 12/82